# EUROPEAN PATENT APPLICATION

(11) **EP 2 700 903 A1**
(43) Date of publication of application: **26.02.2014**
(21) Application number: 12774229.4
(22) Date of filing: 13.04.2012
(51) Int. Cl.: G01B 11/24, B60C 19/00

(54) **TIRE SURFACE SHAPE MEASURING DEVICE AND TIRE SURFACE SHAPE MEASURING METHOD**

(30) Priority: 20.04.2011 JP 2011094056
(71) Applicant: Kabushiki Kaisha Kobe Seiko Sho, Kobe-shi, Hyogo 651-8585 (JP)
(72) Inventor: TAKAHASHI Eiji, Nishi-ku, Kobe-shi, Hyogo 651-2271 (JP); TSUJI Toshiyuki, Nishi-ku, Kobe-shi, Hyogo 651-2271 (JP); MATSUBARA Yoshiaki, Takasago-shi, Hyogo 676-8670 (JP)
(74) Representative: TBK
(86) International application number: PCT/JP2012/060098
(87) International publication number: WO 2012/144430

(57) **Abstract**

The present invention detects the surface shape of each of tires having different sidewall surface thicknesses and tread surface widths with the same image resolution and high accuracy. This tire surface shape measuring device (1) captures an image of linear light applied to the surface of a tire (T), and measures the surface shape of the tire (T) on the basis of measurement signals extracted from the captured image of the linear light. The tire surface shape measuring device (1) is provided with an image capturing element (9) in which an image capturing surface for capturing the image of the linear light applied to the surface of the tire (T) is provided, an image capture area setting means (10) which sets an effective image capture area (A) provided with the length in the longitudinal direction of the image of the linear light on the image capturing surface such that all of the image formed on the image capture surface of the linear light is included, and a pixel data extracting means (11) which extracts a predetermined given number of measurement signals from the set effective image capture area (A).

## Description

### Technical Field

The present invention relates to a tire surface shape measuring device and a tire surface shape measuring method that capture linear light emitted to the surface of a tire and measure the surface shape of the tire according to measurement signals extracted from a captured image including the linear light.

### Background Art

In the manufacturing of tires, the surface shape of the tire has been inspected in shape inspection carried out after a vulcanization process, which is a last process. In recent years, this shape inspection is automated by using a shape measuring device that has sensor units that each includes a laser light source, a CCD camera or a CMOS camera that captures an image based on laser beams from the laser light source, and the like.

In shape inspection in which this shape measuring device is used to employ laser beams, sheet-like laser beams (linear light) are emitted to a tread surface or a sidewall surface, which is a tire surface, to form a light cutting-plane line on the surface. After this, inspection is performed by capturing an image of the light cutting-plane line with the CCD camera, CMOS camera, or another image capturing means and applying a light cutting-plane method to the captured image of the light cutting-plane line to measure a three-dimensional shape of the tire surface.

In measurement of the three-dimensional shape of a sidewall surface, for example, inspection is performed in such a way that normal concave and convex shapes caused by characters, logo marks, and the like are removed from a three-dimensional shape obtained in this way, so fine concave and convex failures on the sidewall surface are also accurately detected.

In recent development of tires for passage cars, tread surfaces tend to be wide and the sidewall surface tend to be thin when compared with conventional tires. That is, it can be said that the development is being pursed toward a direction in which a difference between the width of the tread surface and the thickness of the sidewall surface becomes large. Furthermore, in recent years, tire size expansion is diversified, so the tire sizes and shapes that shape measuring devices have to handle tend to increase.

To inspect tires with various sizes and shapes in response to this trend, in shape measuring devices, a structure to attach tires with various sizes and a structure to change the positions of sensor units to match the size and shape of the attached tire are devised.

PTL 1 discloses an external appearance and shape detecting device used in the shape inspection described above. The external appearance and shape inspection device disclosed in PTL 1 is characterized by having a light emitting means for emitting slit light to a surface, to be inspected, of a test object, an area camera that photographs an area illuminated with the above slit light, a means for relatively moves the above light emitting means, photographing means, and test object, and a means for calculating the coordinates of the test object from pixel data obtained from the area camera, and also having a means for calculating the brightness of the test object from the pixel data obtained from the area camera and a means for detecting an external appearance of the test object according to the above calculated brightness so that the shape and external appearance of the test object can be concurrently detected.

### Citation List

### Patent Literature

PTL 1: Japanese Unexamined Patent Application Publication No. 2003-240521

### Summary of Invention

### Technical Problem

As described above, recent development of tires for passage cars is being pursed toward a direction in which a difference between the tread surface width and the sidewall surface thickness becomes large, and tire size expansion is also diversified. This means that the sensor units in the shape measuring device must capture images of sidewall surfaces with various sizes and tread surfaces with various widths.

If the thickness of the sidewall surface and the width of the tread surface variously change due to changes in tire sizes, the lengths of light cutting-plane lines formed on the sidewall surface and tread surface also variously change. To always detect tire shapes with prescribed precision, however, even if the tire size is changed, an image of the light cutting-plane line must be captured so that its length becomes a fixed length as much as possible within a captured image, regardless of the length of an actually formed light cutting-plane line.

If the external appearance and shape detecting device disclosed in PTL 1 is used, efforts are required to appropriately adjust the shooting distance (working distance) of the sensor unit so that light cutting-plane lines with various different lengths become a fixed length within the captured image according to the tire size, the thickness of the sidewall surface, the width of the tread surface, and the like.

With the external appearance and shape detecting device disclosed in PTL 1, however, there is no structure that changes the shooting distance of the sensor unit, so it is difficult to change the shooting distance in correspondence to tires with various sizes. Even if the shooting distance can be changed, there is another difficulty involved when the operator adjusts the position of the sensor unit so that an optimum shooting distance is always obtained. Therefore, there is a desire for a technology that can detect a surface shape from the captured image of the light cutting-plane line with high resolution even when the position of the sensor unit cannot be adjusted so that an optimum shooting distance can be obtained.

The present invention addresses the problem described above with the object of providing a tire surface shape measuring device and a tire surface shape measuring method that can detect surface shapes of tires with various different sidewall surface thicknesses and tread surface widths with the same high resolution.

### Solution to Problem

To achieve the above object, the present invention used the following technical means.

In a tire surface shape measuring device that captures an image of linear light emitted to the surface of a tire and measures the surface shape of the tire according to measurement signals extracted from the captured image of the linear light, the tire surface shape measuring device according to the present invention is characterized by having an image capturing means that has an image capturing surface used to capture an image of linear light emitted to the surface of the tire, an image capture area setting means that sets, on the image capturing surface, an effective image capture area having the longitudinal length of the image of the linear light so that all images of linear light formed on the image capturing surface are included, and a pixel data extracting means that extracts a prescribed number of measurement signals, the prescribed number being determined in advance, from the set effective image capture area.

Preferably, the image capture area setting means may be structured so as to set the effective image capture area on the image capturing surface as a rectangle and set the distance between both ends across the image of the linear light to the length of the long side of the rectangle.

In a tire surface shape measuring method that captures an image of linear light emitted to the surface of a tire by using an image capturing surface and measures the surface shape of the tire according to measurement signals extracted from the captured image of the linear light, the tire surface shape measuring method according to the present invention is characterized by having an image capture area setting step of setting, on the image capturing surface, an effective image capture area having the longitudinal length of an image of linear light so that all images of linear light formed on the image capturing surface are included and a pixel data extracting step of extracting a prescribed number of measurement signals, the prescribed number being determined in advance, from the set effective image capture area.

Preferably, the image capture area setting step may set the effective image capture area on the image capturing surface as a rectangle and may set the distance between both ends across the linear light to the long side of the rectangle.

### Advantageous Effects of Invention

According to the present invention, it is possible to detect surface shapes of tires with various different sidewall surface thicknesses and tread surface widths with high resolution.

### Brief Description of Drawings

[Fig. 1A] Fig. 1A is a schematic diagram that illustrates the structure of a tire surface shape measuring device in an embodiment of the present invention, illustrating a state in which the surface shape of a small tire is being measured.
[Fig. 1B] Fig. 1B is a schematic diagram that illustrates the structure of the tire surface shape measuring device in an embodiment of the present invention, illustrating a state in which the surface shape of a large tire is being measured.
[Fig. 2] Fig. 2 is a schematic diagram that illustrates the three-dimensional layout of a linear light emitting means and a camera in a sensor unit included in the tire surface shape measuring device.
[Fig. 3A] Fig. 3A is a diagram that illustrates a positional relationship between the tread surface of a tire and a capturing camera on an image capturing surface and also illustrates an effective image capture area, in a case in which the tire is small.
[Fig. 3B] Fig. 3B is a diagram that illustrates a positional relationship between the tread surface of a tire and the capturing camera on the image capturing surface and also illustrates the effective image capture area, in a case in which the tire is small.
[Fig. 4] Fig. 4 is a schematic diagram that illustrates a case in which the tread surface of the small tire was measured; the upper portion illustrates a relationship between a light cutting-plane line and the effective image capture area, and the lower portion illustrates a brightness value distribution on the tread surface.
[Fig. 5] Fig. 5 is a schematic diagram that illustrates a case in which the tread surface of the large tire was measured; the upper portion illustrates a relationship between a light cutting-plane line and the effective image capture area, and the lower portion illustrates a brightness value distribution on the tread surface.

### Description of Embodiments

An embodiment of the present invention will be described below with reference to the drawings.

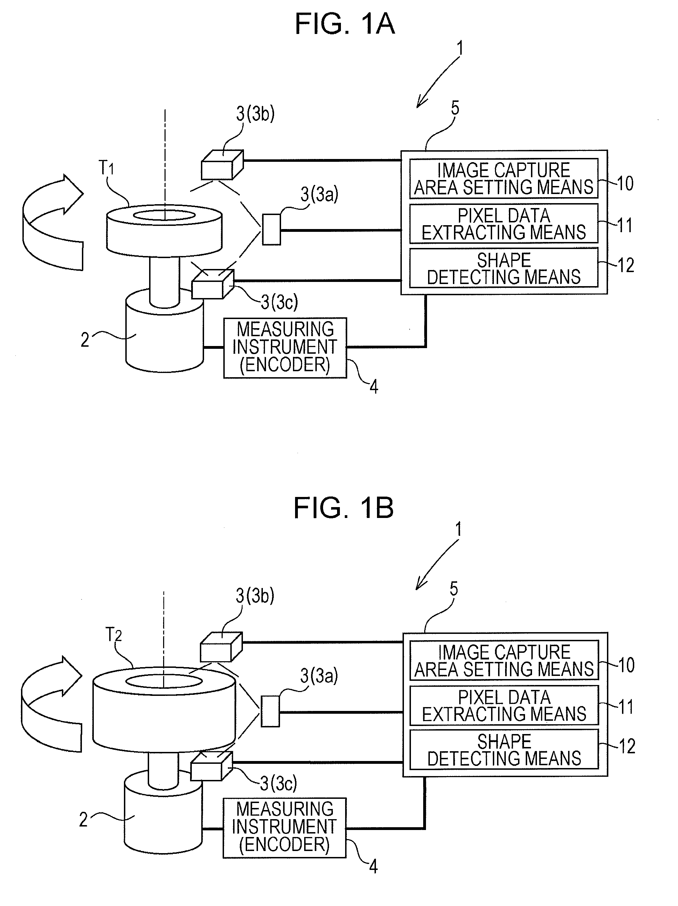

First, the structure of a tire surface shape measuring device 1 in an embodiment of the present invention will be described with reference to Fig. 1.

The tire surface shape measuring device 1 uses an image capturing camera 6 to capture an image of a light cutting-plane line Ls formed by linear light emitted to the surfaces of rotating tires T (tire T₁ and tire T₂) and measures heights of various portions of each tire T by performing shape detection by a light cutting-plane method according to the captured image. In addition, the tire surface shape measuring device 1 replaces the measured heights of the various portions of the tire T with corresponding brightness values to obtain a two-dimensional image (inspection image) of the surfaces of the tire T.

As illustrated in Figs. 1A and 1B, the tire surface shape measuring device 1 has a tire rotating machine 2, sensor units 3, an encoder 4, and an image processing device 5. In Figs. 1A and 1B, the same tire surface shape measuring device 1 is illustrated, but only tires T, which are measurement targets, differ. Fig. 1A illustrates a state in which a tire T₁ with a small size is being measured, and Fig. 1B illustrates a state in which a tire T₂ with a large size is being measured.

The tire rotating machine 2 is a rotating device having a motor that rotates the tire T, which is a target the shape of which is to be detected, around its rotational axis and the like. The tire rotating machine rotates the tire T at a rotational speed of, for example, 60 rpm. During this rotation, the sensor units 3, described later, detect (measure) the surface shape of the entire circumference of the tire T.

Each sensor unit 3, which detects the surface shape of the tire T, is a unit that has a linear light emitting means 7 that emits linear light (light cutting-plane line) to the surface of the rotating tire T, an image capturing camera (image capturing means) 6 that captures an image of a light cutting-plane line reflected on the surface of the tire T, and the like.

In this embodiment, a sensor unit 3a used to detect the shape of the tread surface of the tire T and two sensor units 3b and 3c used to detect the shapes of two sidewall surfaces are included. The sensor unit 3a is disposed so as to face the tread surface, and the sensor units 3b and 3c are disposed so as to face the sidewall surfaces.

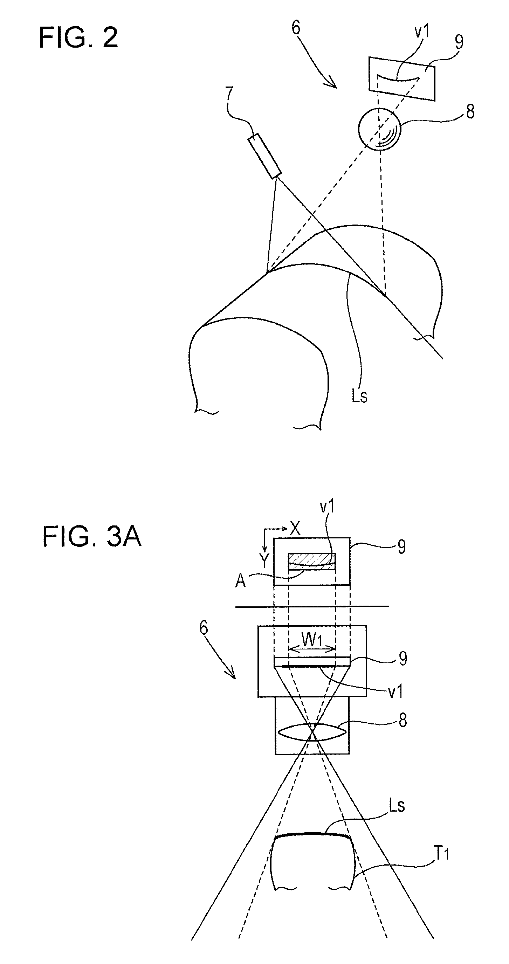

The linear light emitting means 7 and image capturing camera 6 incorporated into each sensor unit 3 will be described with reference to Fig. 2.

The linear light emitting means 7 has a linear light source that emits sheet-like linear light. The linear light source is formed with, for example, an LED, a halogen lamp, or the like. The sheet-like linear light emitted from the linear light emitting means 7 forms a single light cutting-plane line Ls on the surface of the tire T.

The image capturing camera 6 has a camera lens 8 and an image capturing element 9, which is an area image sensor formed with, for example, a CCD or CMOS. The image capturing element 9 has, for example, 1920 × 1080 pixels.

As illustrated in Fig. 2, the image capturing camera 6 obtains a captured image of the light cutting-plane line Ls by capturing an image v1 of the light cutting-plane line Ls projected on the image capturing surface of the image capturing element 9.

Referring again to Fig. 1, the encoder 4 will be described. The encoder 4 attached to the tire rotating machine 2 is a sensor that detects the rotational angle of the rotational axis of the tire rotating machine 2, that is, the rotational angle of the tire T and outputs the detected rotational angle as a detection signal. The detection signal is used to control the capturing timing of the image capturing camera 6 included in the sensor unit 3.

The image processing device 5, described later, receives a detection signal output from the encoder 4 each time the tire T, which rotates a rotational speed of, for example, 60 rpm, rotates through a prescribed angle, and controls the image capturing camera 6 included in the sensor unit 3 so that an image is captured according to the reception timing of the detection signal. Thus, images are captured at a prescribed image capturing rate (image capturing frequency) that matches the reception signals of detection signals.

The image processing device 5 is a device that controls each sensor unit 3 and captures an image of the light cutting-plane line Ls. The image processing device 5 also fetches the captured image through a frame memory and obtains a distribution of tire surface heights from the light cutting-plane line Ls included in the fetched image.

The image processing device 5 has an image capture area setting means 10 that sets an effective image capture area A, which is used to capture the image of the light cutting-plane line Ls, on the image capturing surface of the image capturing element 9 included in the image capturing camera 6, and also has a pixel data extracting means 11 that extracts only pixel data present in the set effective image capture area A from the image capturing element 9.

In addition, the image processing device 5 has a shape detecting means 12 that extracts the light cutting-plane line Ls by, for example, applying binarization processing to the fetched image and obtains a distribution of tire surface heights from the obtained light cutting-plane line Ls according to the principle of the triangulation method.

The image processing device 5 is formed with, for example, a personal computer having a frame memory or the like; the image capture area setting means 10 and pixel data extracting means 11 output commands to a control unit in the image capturing camera 6 incorporated into the sensor unit 3 for control purposes.

The image capture area setting means 10 and pixel data extracting means 11 in the image processing device 5 will be described with reference to Figs. 3A to 5.

The image capture area setting means 10 sets the effective image capture area A on the image capturing surface so that images of linear light formed on the image capturing surface of the image capturing element 9, that is, all images v1 of light cutting-plane lines Ls projected on the image capturing surface are included.

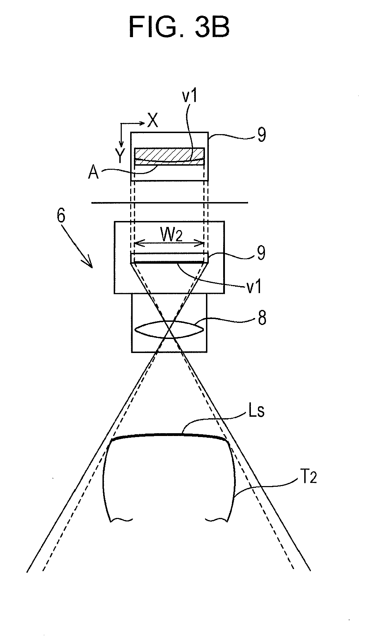

Fig. 3A schematically illustrates a correspondence between a light cutting-plane line Ls formed on a tread surface of a small tire T₁ and the image v1 of the light cutting-plane line Ls projected on the image capturing surface of the image capturing element 9. Fig. 3B schematically illustrates a correspondence between a light cutting-plane line Ls formed on a tread surface of a large tire T₂ and the image v1 on the image capturing surface.

In Figs. 3A and 3B, the shooting distances (working distances) from the camera lens 8 to the tread surface of the tire T are almost the same. However, these drawings indicate that when the size of the tire T differs, the length of the light cutting-plane line Ls differs and thereby the length of the image v1 on the image capturing surface also differs.

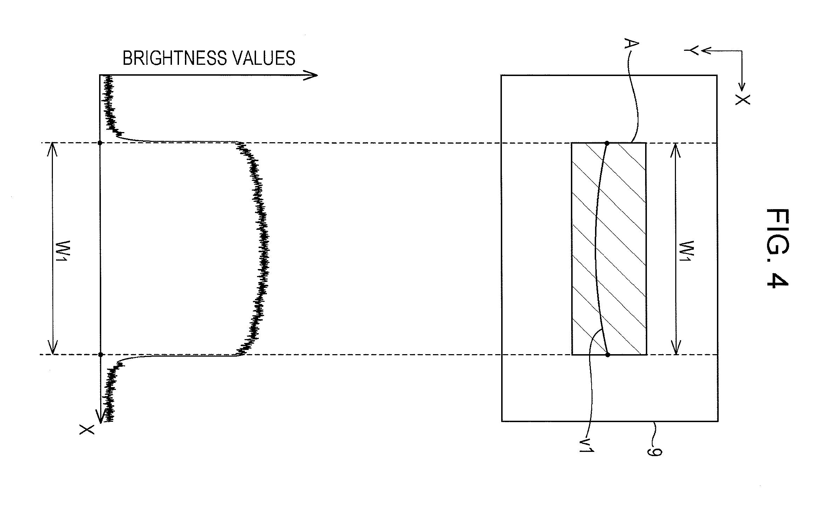

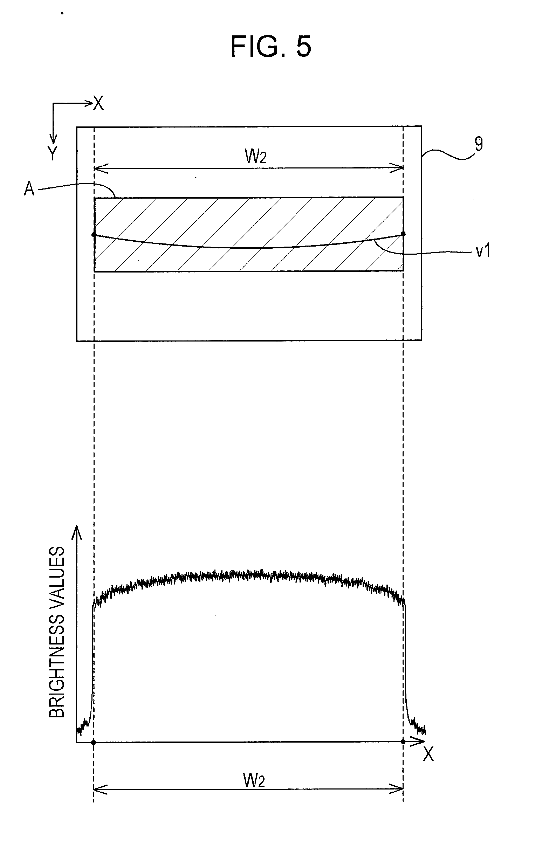

As illustrated in Figs. 3A, 3B, and 4, for example, when the tire is small, the light cutting-plane line Ls is short and the image v1 on the image capturing surface is also short (the width is W₁). As illustrated in Figs. 3A, 3B, and 5, conversely when the tire is large, the light cutting-plane line Ls is long and the image v1 on the image capturing surface is also long (the width is W₂).

The image capture area setting means 10 sets the effective image capture area A that matches the length of the image v1 on the image capturing surface so as to include all images v1, the lengths of which vary with the tire T.

As indicated by inclined lines at the upper portion in Figs. 3A and 3B, the effective image capture area A is a set of pixels on the image capturing surface that are actually used to capture the image v1 of the light cutting-plane line Ls; the effective image capture area A is set so as to be a rectangle when the image capturing surface of the image capturing element 9 is viewed from the front. As illustrated in Figs. 3A and 3B, if for example, the ranges of the X coordinates and Y coordinates of pixels on the image capturing surface (ranges of pixel addresses) are determined, and a set of pixels having X coordinates and Y coordinates (pixel addresses) within these ranges are taken as the effective image capture area A, a rectangular effective image capture area A with its long side being along the longitudinal direction of the image v1 can be set.

The upper limit and lower limit of this X coordinate range may be the X coordinates at both ends of the image v1 of the light cutting-plane line Ls. The upper limit of the Y coordinate range may determined so that it is adequately larger than the maximum value of the Y coordinates of the image v1, and lower limit of the Y coordinate range may be determined so that it is adequately smaller than the minimum value of the Y coordinates of the image v1. Thus, the effective image capture area A can be set according to the length of the image v1 and the image v1 can be reliably captured within the effective image capture area A.

The pixel data extracting means 11 retrieves, from the image capturing element 9, pixel data (brightness data of pixels) present in the effective image capture area A set by the image capture area setting means 10.

In an example, if the effective image capture area A is X × Y = 1200 × 300 pixels in Fig. 4, the pixel data extracting means 11 issues, to the control unit in the image capturing camera 6, a command to transfer horizontally scanned data for one pixel every three pixels, for example, along the Y axis from the pixel data in the effective image capture area A. In addition, the pixel data extracting means 11 issues, to the outside, a command to transfer pixel data for one pixel every two pixels, for example, along X axis in relation to the transferred horizontally scanned data. That is, the pixel data extracting means 11 sets 100 horizontal scanning lines and 600 vertical scanning lines for the effective image capture area A as a predetermined number of scanning lines, and extracts pixel data from the effective image capture area A as measurement signals.

A brightness value distribution over the width W₁ of the light cutting-plane line Ls, as illustrated in the lower portion in Fig. 4, is obtained from the pixel data extracted in this way.

In another example, if the effective image capture area A is X × Y = 1800 × 400 pixels in Fig. 5, the pixel data extracting means 11 issues, to the control unit in the image capturing camera 6, a command to transfer horizontally scanned data for one pixel every four pixels, for example, along the Y axis from the pixel data in the effective image capture area A. In addition, the pixel data extracting means 11 issues, to the outside, a command to transfer pixel data for one pixel every three pixels, for example, along X axis in relation to the transferred horizontally scanned data. Thus, the pixel data extracting means 11 sets 100 horizontal scanning lines and 600 vertical scanning lines for the effective image capture area A, and extracts pixel data.

The above pixel extraction method is generalized as follows.

It is assumed that the effective image capture area A is X × Y = Pₓ × P_{y} pixels and that the number of horizontal scanning lines to be extracted is n and the number of vertical scanning lines to be extracted is m.

Then, the pixel data extracting means 11 issues, to the control unit in the image capturing camera 6, a command to transfer horizontally scanned data for one pixel every [P_{y}/n] pixels along the Y axis from the pixel data in the effective image capture area A. The pixel data extracting means 11 also issues, to the outside, a command to transfer pixel data for one pixel every [Pₓ/m] pixels along X axis in relation to the transferred horizontally scanned data.

[P_{y}/n] and [Pₓ/m] are integers obtained by rounding off or cutting down P_{y}/n and Pₓ/m.

As in Fig. 4, a brightness value distribution over the width W₂ of the light cutting-plane line Ls, as illustrated in the lower portion in Fig. 5, is obtained from the pixel data extracted in this way.

Thus, in this embodiment, even if the size of the effective image capture area A differs, the number of horizontal scanning lines (100 in the above example) and the number of vertical scanning lines (600 in the above example) are not changed but are fixed. That is, the number of scanning lines remains the same regardless of whether the tread surface of the small tire T₁ or the tread surface of the large tire T₂ is measured. Accordingly, even if tires with different sidewall surface thicknesses or different tread surface widths are attached to the tire surface shape measuring device 1, surface shapes can be detected with the same image resolution and high precision, which are achieved by a fixed number of scanning lines.

The number of scanning lines (lines to be extracted) is determined within a range in which the image capturing frequency of the image capturing element 9 can achieved.

Next, the shape detecting means 12 in the image processing device 5 applies the principle of the triangulation method to the image of the light cutting-plane line Ls, which is formed from the pixel data (brightness data) extracted by the pixel data extracting means 11, to obtain height distribution information about a portion (corresponding to one line on the tire surface) to which the light cutting-plane line Ls was emitted.

Even for tires T (tire T₁ and tire T₂) with different sizes, the tire surface shape measuring device 1, in this embodiment, having the structure described above can set the effective image capture area A having an appropriate size through the image capture area setting means 10, and can set pixel data of a captured image from the effective image capture area A through the pixel data extracting means 11.

The operation of the tire surface shape measuring device 1 will be described with reference to Figs. 1, 4, and 5.

As described above, the tire surface shape measuring device 1 has the sensor unit 3a used to detect the shape of the tread surface of the tire T₁ and the two sensor units 3b and 3c used to detect the shapes of its two sidewall surfaces. The sensor unit 3a is disposed so as to face the tread surface, and the sensor units 3b and 3c are disposed so as to face the sidewall surfaces. Each of the sensor units 3a, 3b, and 3c has the linear light emitting means 7, which emits linear light to the surface of the tire T₁, and the image capturing means 6, which captures an image of a light cutting-plane line Ls reflected on the surface of the tire T₁. Three linear light rays from the sensor units 3a, 3b, and 3c may be mutually linked and may be a single linear light ray that is continuous on the surface of the tire T₁. Alternatively, these linear light rays may be discontinuous linear light rays.

The image captured by the image capturing camera 6 disposed in each of the sensor units 3a, 3b, and 3c is sent to the image processing device 5. The image processing device 5, which has the image capture area setting means 10 and pixel data extracting means 11 as described above, processes the captured image sent from the relevant sensor unit 3a, 3b, or 3c.

The sensor units 3a, 3b, and 3c may be operated at the same time or may be operated at different times. Either operation mode may be selected depending on the image capturing situation of the light cutting-plane line Ls, as described later.

First, an operation during measurement of the tread surface of the tire T₁ will be described with reference to Fig. 4.

When the tire T₁ is attached to the tire surface shape measuring device 1, starts to rotate, and reaches a prescribed rotational speed (60 rpm, for example), the linear light emitting means 7 in the sensor unit 3a first emits linear light to the tread surface of the tire T₁. The emitted linear light forms a light cutting-plane line Ls on the tread surface of the tire T₁. The image capturing camera 6 captures an image of the formed light cutting-plane line Ls, and forms the image v1 of the light cutting-plane line Ls on the image capturing surface of the image capturing element 9.

At this time, the periphery of the light cutting-plane line Ls is dark, so almost nothing other than the image v1 of the light cutting-plane line Ls is captured. Accordingly, it can be thought that only the image v1 is captured by the image capturing camera 6 and the captured image v1 directly reflects the shape and width of the tread surface by itself.

As illustrated in the upper portion in Fig. 4, the image capture area setting means 10 in the image processing device 5 sets the rectangular effective image capture area A on the image capturing surface of the image capturing element 9 (image capture area setting step) so that the distance (width) W₁ between the X coordinates at both ends of the image v1 becomes the length of the long side in the longitudinal direction.

After having set the effective image capture area A, the image processing device 5 captures an image of the light cutting-plane line Ls over the entire circumference of the tire T₁ by using only the effective image capture area A on the image capturing surface of the image capturing element 9 in the sensor unit 3a.

Each time the tire T₁, which rotates at a speed of 60 rpm, rotates through a prescribed angle, the image processing device 5 receives a detection signal output from the encoder 4. The image processing device 5 captures an image of the light cutting-plane line Ls by using the image capturing camera 6 of the sensor unit 3a according to the reception timing of the detection signal. Thus, the image capturing camera 6 captures images of a plurality of light cutting-plane lines Ls formed at prescribed positions on the tread surface over the entire circumference of the tire T₁ at a prescribed image capturing frequency (2 kHz, for example) matching the reception timing of the detection signal, so a plurality of images v1 of light cutting-plane lines Ls formed on the image capturing surface of the image capturing element 9 are obtained.

Next, the pixel data extracting means 11 extracts pixel data (a predetermined number of measurement signals) corresponding to a prescribed number of scanning lines (600 lines × 100 lines, for example) from the image of the light cutting-plane line Ls, which has been captured in the effective image capture area A, and transfers the extracted pixel data to the frame memory (pixel data extraction step).

Upon completion of image capturing on the tread surface, the image processing device 5 operates the sensor unit 3b to capture an image of the upper sidewall of the tire T₁ by the same method as when the sensor unit 3a captures an image of the tread surface. Images of a plurality of light cutting-plane lines Ls formed at prescribed positions on the upper sidewall surface are captured over the entire circumference of the tire T₁ by the image capturing by the sensor unit 3b, obtaining a plurality of images v1 of light cutting-plane lines Ls formed on the image capturing surface of the image capturing element 9.

Upon completion of image capturing on the upper sidewall, the image processing device 5 operates the sensor unit 3c to capture an image of the lower sidewall of the tire T₁ by the same method. Images of a plurality of light cutting-plane lines Ls formed at prescribed positions on the lower sidewall surface are captured over the entire circumference of the tire T₁ by the image capturing by the sensor unit 3c, obtaining a plurality of image v1 of light cutting-plane lines Ls formed on the image capturing surface of the image capturing element 9.

Next, the shape detecting means 12 applies the principle of the triangulation method to the images v1 of the plurality of light cutting-plane lines Ls, which are formed from the pixel data (brightness data) extracted by the pixel data extracting means 11 and then transferred to the frame memory, for each of the tread surface and both sidewalls of the tire T₁. Height distribution information about a portion (corresponding to one line on the tire surface) to which each light cutting-plane line Ls was emitted is obtained by applying the triangulation method to the image v1. The shape detecting means 12 links the height distribution information obtained from all images v1 for the entire circumference of the tire T₁ to obtain a two-dimensional image (inspection image) of the tread surface, upper sidewall surface, and lower sidewall surface of the tire T₁.

As described above, one light cutting-plane line Ls is formed on each of the tread surface, upper sidewall surface, and lower sidewall surface. If the positions of the light cutting-plane lines Ls formed on these tire surfaces are the same in the whole circumference direction of the tire T₁, there is a possibility that an image of an end of a light cutting-plane line Ls formed on an adjacent tire surface is captured on the image capturing surface illustrated in Figs. 4 and 5. If an image of an end of an adjacent light cutting-plane line Ls is captured, an image of the tire T₁ is captured by making a switchover among the sensor units 3a to 3c as described above.

If an image of an end of an adjacent light cutting-plane line Ls is not captured, the sensor units 3a to 3c can be concurrently operated.

These light cutting-plane lines Ls do not need to be formed at the same position in the whole circumference direction of the tire T₁; they may be formed at different positions in the whole circumference direction of the tire T₁.

Next, operation performed when the tire T₂, which is smaller than the tire T₁ in size, will be described with reference to Fig. 5.

The method of measuring the tire T₂, illustrated in Fig. 5, is the same as the method of measuring the tire T₁. The image processing device 5 sequentially switches the sensor units 3a to 3c and captures the images v1 of light cutting-plane lines Ls formed on the tread surface, upper sidewall surface, and lower sidewall surface of the tire T₂.

The image capture area setting means 10 sets the effective image capture area A with the width W₂, which is shorter than the width W₁, according to the image v1, and the pixel data extracting means 11 extracts pixel data (a predetermined number of measurement signals) corresponding to a prescribed number of scanning lines (600 lines × 100 lines, for example) from the image of the light cutting-plane line Ls, which has been captured in the effective image capture area A, and transfers the extracted pixel data to the frame memory. After this, a two-dimensional image (inspection image) of the tread surface, upper sidewall surface, and lower sidewall surface of the tire T₂ is obtained by the same method as the measuring method for the tire T₁.

As described above, when the tire surface shape measuring device 1 in this embodiment is used, even if tires T, which are measurement targets, have different sizes as with the tire T₁ and tire T₂, the image v1 of the light cutting-plane line Ls can be captured by setting the effective image capture area A according to the length of the image v1 on the image capturing surface.

In addition, since pixel data corresponding to a prescribed number of scanning lines is extracted regardless of the length (length of the image v1) of the long side of the set effective image capture area A, even if the size of the tire T is changed, an inspection image of the tire T₂ can be obtained with stable high resolution and the surface shape of the tire T₂ can be detected.

It should be thought that the embodiment disclosed this time is only an example in all points and is not restrictive. Particularly, in the embodiment disclosed this time, for items that are not explicitly described such as, for example, operation conditions, measurement conditions, various types of parameters, the sizes, weights, and volumes of structural components, and the like, their values do not deviate from ranges within which those skilled in the art usually embody practices, but values that ordinary persons skilled in the art can easily assume are employed.

For example, in the embodiment of the present invention, the effective image capture area A had been first set on the image capturing surface of the image capturing element 9, after which pixel data extracted from the image of the light cutting-plane line Ls, the image being captured in the effective image capture area A, has been transferred to the frame memory. However, this is not a limitation; all images captured in the image capturing element 9 may be transferred to the frame memory before the effective image capture area A is set. Then, it is also possible to set the effective image capture area A for the captured images stored in the frame memory and then extract the pixel data.

### Reference Signs List

- 1: tire surface shape measuring device
- 2: tire rotating machine
- 3: sensor unit
- 4: encoder
- 5: image processing device
- 6: image capturing camera
- 7: linear light emitting means
- 8: camera lens
- 9: image capturing element
- 10: image capture area setting means
- 11: pixel data extracting means
- 12: shape detecting means
- A: effective image capture area
- Ls: light cutting-plane line
- T: tire
- v1: image

## Claims

1. A tire surface shape measuring device that captures an image of linear light emitted to a surface of a tire and measures a surface shape of the tire according to a measurement signal extracted from the captured image of the linear light, the device comprising:
an image capturing means that has an image capturing surface used to capture an image of linear light emitted to the surface of the tire;
an image capture area setting means that sets, on the image capturing surface, an effective image capture area having a longitudinal length of the image of the linear light so that all images of linear light formed on the image capturing surface are included; and
a pixel data extracting means that extracts a prescribed number of measurement signals, the prescribed number being determined in advance, from the set effective image capture area.

2. The tire surface shape measuring device according to Claim 1, wherein the image capture area setting means is structured so as to set the effective image capture area on the image capturing surface as a rectangle and set a distance between both ends across the image of the linear light to a length of a long side of the rectangle.

3. A tire surface shape measuring method that captures an image of linear light emitted to a surface of a tire by using an image capturing surface and measures a surface shape of the tire according to a measurement signal extracted from the captured image of the linear light, the method comprising:
an image capture area setting step of setting, on the image capturing surface, an effective image capture area having a longitudinal length of an image of linear light so that all images of linear light formed on the image capturing surface are included; and
a pixel data extracting step of extracting a prescribed number of measurement signals, the prescribed number being determined in advance, from the set effective image capture area.

4. The tire surface shape measuring method according to Claim 3, wherein the image capture area setting step sets the effective image capture area on the image capturing surface as a rectangle and sets a distance between both ends across the linear light to a length of a long side of the rectangle.
